# EUROPÄISCHE PATENTSCHRIFT

(11) **EP 2 628 231 B1**
(45) Veröffentlichungstag und Bekanntmachung des Hinweises auf die Patenterteilung: **26.04.2017**
(21) Anmeldenummer: 10765621.7
(22) Anmeldetag: 13.10.2010
(51) Int. Cl.: G01W 1/10, H02J 3/38, H02J 3/28

(54) **STEUERUNG EINES ELEKTRISCHEN ENERGIEVERSORGUNGSNETZES**
CONTROLLING AN ELECTRICAL ENERGY SUPPLY NETWORK
COMMANDE D'UN RÉSEAU DE DISTRIBUTION D'ÉNERGIE ÉLECTRIQUE

(43) Veröffentlichungstag der Anmeldung: 21.08.2013
(73) Patentinhaber: Siemens Aktiengesellschaft, 80333 München (DE)
(72) Erfinder: STÄHLE, Samuel, Thomas, 47475 Kamp Lintfort (DE)
(86) Internationale Anmeldenummer: PCT/EP2010/065302
(87) Internationale Veröffentlichungsnummer: WO 2012/048736

(56) Entgegenhaltungen:
- US-A1- 2002 194 113
- US-A1- 2010 138 063
- US-A1- 2010 145 532
- SUDIPTA CHAKRABORTY ET AL: "Distributed Intelligent Energy Management System for a Single-Phase High-Frequency AC Microgrid", IEEE TRANSACTIONS ON INDUSTRIAL ELECTRONICS, IEEE SERVICE CENTER, PISCATAWAY, NJ, USA, Bd. 54, Nr. 1, 1. Februar 2007 (2007-02-01), Seiten 97-109, XP011163573, ISSN: 0278-0046, DOI: DOI:10.1109/TIE.2006.888766
- DARSHIT SHAH ET AL: "Intelligent Monitoring and Control of Microgrid", INDUSTRY APPLICATIONS SOCIETY ANNUAL MEETING (IAS), 2010 IEEE, IEEE, PISCATAWAY, NJ, USA, 3. Oktober 2010 (2010-10-03), Seiten 1-6, XP031783932, ISBN: 978-1-4244-6393-0

## Beschreibung

Die Erfindung betrifft ein Verfahren zum Steuern eines elektrischen Energieversorgungsnetzes, aus dem elektrische Endverbraucher mit elektrischer Energie versorgt werden und in das solche dezentrale Energieerzeuger elektrische Energie einspeisen, deren erzeugte Energiemenge von einer aktuellen Wetterlage im örtlichen Bereich des jeweiligen dezentralen Energieerzeugers abhängt, bei dem ein mathematisches Netzmodell in einer Steuereinrichtung einer Automatisierungsanlage des elektrischen Energieversorgungsnetzes bereitgestellt wird, das einen Zusammenhang zwischen einer aktuellen Wetterlage im örtlichen Bereich des jeweiligen dezentralen Energieerzeugers und der von dem jeweiligen dezentralen Energieerzeuger in einzelne Abschnitte des elektrische Energieversorgungsnetzes eingespeisten elektrischen Energie angibt. Wetterdaten, die eine aktuelle Wetterlage im örtlichen Bereich der jeweiligen dezentralen Energieerzeuger angeben, werden an die Steuereinrichtung übermittelt. Aus den Wetterdaten werden mittels der Steuereinrichtung Wetterprognosedaten ermittelt, die eine erwartete zukünftige Wetterlage im Bereich der jeweiligen dezentralen Energieerzeuger angeben, und es wird eine erwartete zukünftige Einspeisung elektrischer Energie seitens der jeweiligen dezentralen Energieerzeuger in das elektrische Energieversorgungsnetz aus den Wetterprognosedaten mittels der Steuereinrichtung unter Verwendung des Netzmodells bestimmt. Die Erfindung bezieht sich zudem auf eine Steuereinrichtung zum Steuern eines elektrischen Energieversorgungsnetzes sowie eine Automatisierungsanlage mit einer entsprechenden Steuereinrichtung.

Ein solches Verfahren geht beispielsweise aus SUDIPTA CHAKRA-BORTY ET AL: "Distributed Intelligent Energy Management System for a Single-Phase High-Frequency AC Microgrid", IEEE TRANSACTIONS ON INDUSTRIAL ELECTRONICS, IEEE SERVICE CENTER, PISCATAWAY, NJ, USA, Bd. 54, Nr. 1, 1. Februar 2007 (01.02.2007), Seiten 97-109, XP011163573, ISSN: 0278-0046, D0I: 10.1109/TIE.2006.888766 hervor.

Im Verlauf der letzten Jahre waren Energieversorgungsnetze zum Übertragen und Verteilen elektrischer Energie hinsichtlich ihres Aufbaus einem starken Wandel ausgesetzt. Während in klassisch aufgebauten Energieversorgungsnetzen elektrische Energie von wenigen zentralen Großerzeugern zu einer Vielzahl elektrischer Endverbraucher übertragen wird und damit die Übertragungsrichtung im Wesentlichen von dem Großerzeuger (als Quelle) zu den einzelnen Endverbrauchern (als Senken) verläuft, haben in der jüngeren Vergangenheit Bestrebungen zu liberalisierten Energiemärkten dazu geführt, dass eine Vielzahl kleinerer und dezentral im Energieversorgungsnetz verteilter Energieerzeuger entstanden ist, die ihre elektrische Energie in das Energieversorgungsnetz einspeisen. Bei solchen dezentralen Kleinerzeugern handelt es sich beispielsweise um sogenannte regenerative Energieerzeuger, also Energieerzeuger, die elektrische Energie aus kurzfristig erneuerbaren Energiequellen, wie z.B. Wind oder solarer Einstrahlung, bereitstellen. Solche Energieerzeuger können beispielsweise Windkraftanlagen oder Photovoltaikanlagen sein.

Die Vielzahl vorhandener dezentraler Energieerzeuger stellt vorhandene Energieautomatisierungsanlagen zur Steuerung elektrischer Energieversorgungsnetze vor neue Herausforderungen, da viele der bisher für klassische Energieversorgungsnetze verwendeten zentralen Regelansätze zur Steuerung eines viele dezentrale Energieerzeuger aufweisenden Energieversorgungsnetzes nicht mehr geeignet sind.

Während auch in klassischen Energieversorgungsnetzen eine Schwierigkeit bei der Versorgung der zeitlich schwankenden Nachfrage nach elektrischer Energie durch die Energieverbraucher besteht, kommen in Energieversorgungsnetzen mit dezentralen Energieerzeugern Probleme hinsichtlich des stark schwankenden Angebots elektrischer Energie durch die dezentralen Energieerzeuger hinzu, die beispielsweise von dem Vorhandensein nicht kontrollierbarer Primärenergiequellen (wie beispielsweise Wind oder solare Einstrahlung) abhängig sind.

Bei Photovoltaikanlagen ist die Menge der erzeugten elektrischen Energie von der aktuellen Sonneneinstrahlung über den betreffenden Anlagen abhängig. Konkret bedeutet dies, dass solche Anlagen bei besonders starker Sonneneinstrahlung - z.B. bei wolkenfreiem Himmel - besonders viel Energie erzeugen, während bei geringer Sonneneinstrahlung - z.B. bei plötzlich aufziehender dichter Bewölkung - die Menge erzeugter elektrischer Energie deutlich abnimmt. Ein entsprechendes Verhalten ist bei Windenergieanlagen bezüglich der aktuellen Windstärke zu beobachten, mit welcher die Menge der erzeugten elektrischen Energie korreliert.

Die Folge dieser direkten Abhängigkeit der Energieerzeugung von der aktuellen Wetterlage im örtlichen Bereich der jeweiligen Energieerzeuger ist eine starke Fluktuation der in das Energieversorgungsnetz eingespeisten elektrischen Energiemenge.

Da Photovoltaikanlagen typischerweise in Niederspannungsteilen der Energieversorgungsnetze installiert werden, und auch Windkraftanlagen immer häufiger in den Niederspannungsteil einspeisen, ergeben sich somit teilweise sehr starke Fluktuationen der Einspeisung von regenerativ erzeugter elektrischer Energie in die Niederspannungsteile der Energieversorgungsnetze, aus denen ebenfalls der Großteil der elektrischen Endverbraucher mit elektrischer Energie versorgt wird. Durch schwankende Einspeisungen hervorgerufene Fluktuationen sind außerdem auch in Mittelspannungsteilen von Energieversorgungsnetzen zu beobachten.

Technisch kann sich dies durch plötzlich überhöhte oder auch plötzlich einbrechende Spannungsniveaus auf einzelnen Abschnitten des Energieversorgungsnetzes auswirken. Während eine erhöhte Einspeisung zu einem Anstieg des Spannungsniveaus in dem Netzabschnitt führen kann, führt eine verringerte Einspeisung ggf. zu einem absinkenden Spannungsniveau. Hieraus resultiert zum einen eine schwankende Qualität der Energieversorgung der Endverbraucher, zum anderen aber auch das Risiko für technische Ausfälle von Geräten und Anlagen der Kunden des Versorgungsnetzbetreibers aufgrund von Verletzungen des vorgeschriebenen Spannungsbandes, wie es beispielsweise in Europa in der Norm EN50160 definiert wird. Darüber hinaus kann es ebenfalls passieren, dass sich ein dezentraler Energieerzeuger, z.B. eine Photovoltaik-Anlage, bei Überschreitung einer als maximal definierten Spannung auf seinem Netzabschnitt automatisch abschaltet, und sein Besitzer damit nicht länger Energie in das Netz einspeisen kann, was mit Einnahmeausfällen verbunden ist.

Der Erfindung liegt somit die Aufgabe zugrunde, die Stabilität eines elektrischen Energieversorgungsnetzes, in das solche dezentralen Energieerzeuger elektrische Energie einspeisen, deren erzeugte Energiemenge von einer aktuellen Wetterlage im örtlichen Bereich des jeweiligen dezentralen Energieerzeugers abhängt, zu erhöhen.

Zur Lösung dieser Aufgabe wird ein Verfahren der eingangs genannten Art vorgeschlagen, bei dem mittels der Steuereinrichtung Steuersignale erzeugt werden, die zur Stabilisierung eines Spannungsniveaus in solchen Abschnitten des Energieversorgungsnetzes dienen, in denen unter Verwendung der Ergebnisse des Netzmodells eine erwartete zukünftige Einspeisung elektrischer Energie ermittelt worden ist, die zu einer Abweichung des Spannungsniveaus in dem jeweiligen Abschnitt von einem vorgegebenen Soll-Spannungsniveau führt, die einen Abweichungsschwellenwert übersteigt.

Der besondere Vorteil des erfindungsgemäßen Verfahrens besteht darin, dass es eine vorausschauende Steuerung einzelner Abschnitte des Energieversorgungsnetzes ermöglicht, indem die Auswirkungen einer zukünftig erwarteten Wetterlage im örtlichen Bereich von dezentralen Energieerzeugern auf deren Einspeisung elektrischer Energie betrachtet werden, und in solchen Abschnitten, in denen durch eine veränderte Einspeisesituation eine deutliche Änderung eines Spannungsniveaus zu erwarten ist, Steuerhandlungen in Form von aktuell wirkenden und/oder in die nahe Zukunft gerichteten Steuersignalen vorgenommen werden, die zur Stabilisierung des Spannungsniveaus dienen. Hierdurch wird einerseits die Elektroenergiequalität in den betreffenden Netzabschnitten verbessert, da dort auch bei plötzlichen Änderungen der Einspeisung elektrischer Energie keine starken Schwankungen der Spannung mehr auftreten, und andererseits können ungewollte Ausfälle unterversorgter Endgeräte bei niedrigen Spannungsniveaus vermieden werden. Eine vorausschauende Steuerung bedeutet in diesem Fall, dass die jeweilige Wetterlage in der nahen Zukunft, also beispielsweise einen Zeitbereich bis 1 Stunde in die Zukunft, zur Ableitung von Steuerhandlungen betrachtet werden muss.

Konkret kann zur Steuerung vorgesehen sein, dass für den Fall, dass die ermittelte zukünftige Einspeisung elektrischer Energie in einen Abschnitt des Energieversorgungsnetzes ein Absinken des Spannungsniveaus in diesem Abschnitt angibt, die Steuersignale ausgewählte elektrische Endverbraucher, die von dem betreffenden Abschnitt gespeist werden, abschalten.

Hierdurch kann bereits vorausschauend das Spannungsniveau des betroffenen Netzabschnitts stabilisiert werden, da durch gezielte Abschaltung elektrischer Verbraucher auf eine erwartete geringere Einspeisung elektrischer Leistung mit einer Verringerung der Nachfrage nach elektrischer Leistung in dem Netzabschnitt reagiert wird. Außerdem kann durch die Abschaltung ausgewählter Verbraucher eine ungewollte Störung oder Abschaltung sensibler elektrischer Verbraucher vermieden werden. Zur vorübergehenden Abschaltung eignen sich beispielsweise elektrische Endverbraucher mit Speicherfunktionalität, wie z.B. Kühl- und Gefrierschränke, Klimaanlagen, Warmwasserbereiter oder auch Ladestationen für Elektrofahrzeuge, bei denen die Fahrzeugbatterie als Energiespeicher angesehen werden kann. Außerdem können solche ausgewählten Endverbraucher auch solche Geräte sein, deren momentaner Betrieb nicht unbedingt notwendig ist, z.B. einzelne Beleuchtungselemente eines größeren Beleuchtungssystems. Im Einzelfall können mit den Kunden eines Betreibers eines Energieversorgungsnetzes einzelne Geräte vereinbart werden, die seitens des Netzbetreibers im Bedarfsfall abgeschaltet werden können. Dazu müssen solche Geräte über eine entsprechende Ansteuerung verfügen, die zum Empfang und zur Umsetzung der von der Steuereinrichtung der Automatisierungsanlage ausgesandten Steuersignale (z.B. Steuersignale nach der Rundsteuertechnik) eingerichtet sind.

Außerdem kann vorgesehen sein, dass für den Fall, dass die ermittelte zukünftige Einspeisung elektrischer Energie in einen Abschnitt des Energieversorgungsnetzes eine Erhöhung des Spannungsniveaus in diesem Abschnitt angibt, die Steuersignale ausgewählte elektrische Endverbraucher, die von dem betreffenden Abschnitt gespeist werden, einschalten und/oder ausgewählte dezentrale Energieerzeuger, die in den betreffenden Abschnitt einspeisen, abschalten.

Hierdurch kann ein überhöhtes Spannungsniveau vermieden werden, da durch das gezielte Hinzuschalten von elektrischen Endverbrauchern mit steigender Einspeisung auch die Nachfrage nach elektrischer Energie erhöht wird, bzw. - z.B. wenn eine Einschaltung weiterer Endverbraucher nicht möglich ist oder nicht ausreichend wäre - durch ein gezieltes Abschalten ausgewählter dezentraler Energieerzeuger eine vermehrte Einspeisung in den betreffenden Netzabschnitt verhindert wird. Ein solches gezieltes Abschalten bietet ferner den Vorteil, eine ausgeglichene und damit faire Verteilung der Abschaltzeiten über alle Energieerzeuger in einem Netzabschnitt durchführen zu können und damit auch die mit der Abschaltung verbundenen Einnahmeausfälle gleichmäßig auf die einzelnen Betreiber zu verteilen.

Gemäß einer weiteren vorteilhaften Ausführungsform des erfindungsgemäßen Verfahrens kann vorgesehen sein, dass die Wetterdaten mittels Messgeräten an dem jeweiligen dezentralen Energieerzeuger erfasst und/oder von einer zentralen Wetterdatenbank bereitgestellt und an die Steuereinrichtung übermittelt werden.

Auf diese Weise können der Steuereinrichtung stets aktuelle Wetterdaten zur Verfügung gestellt werden. Da an manchen dezentralen Energieerzeugern (z.B. Windkraftanlagen) ohnehin Messgeräte zur Erfassung von wetterbezogenen Messgrößen vorhanden sind, können die entsprechenden Messwerte als Wetterdaten einfach an die Steuereinrichtung übermittelt werden. Alternativ oder zusätzlich können Wetterdaten für die fraglichen Standorte der dezentralen Energieerzeuger auch von Wetterdatenbanken (z.B. Deutscher Wetterdienst) bezogen werden. Hierfür muss die genaue geografische Lage der dezentralen Energieerzeuger einmalig erfasst und in der Steuereinrichtung hinterlegt werden.

Eine weitere vorteilhafte Ausführungsform des erfindungsgemäßen Verfahrens sieht zudem vor, dass die Ermittlung von die erwartete zukünftige Wetterlage im örtlichen Bereich der jeweiligen dezentralen Energieerzeuger unter Verwendung von Mustererkennungsverfahren erfolgt, die einen Vergleich der aktuellen Wetterdaten mit in der Steuereinrichtung gespeicherten historischen Wetterdaten durchführen und daraus eine wahrscheinliche Entwicklung der Wetterlage im örtlichen Bereich der jeweiligen dezentralen Energieerzeuger unter Bestimmung der Wetterprognosedaten bestimmen.

Hierbei können z.B. Ähnlichkeiten oder regelmäßige Wiederholungen von bestimmten Verläufen der aktuellen Wetterdaten im Vergleich mit Verläufen von zuvor gespeicherten historischen Wetterdaten erkannt werden, so dass daraus auf Wetterprognosedaten geschlossen werden kann, die einen wahrscheinlichen zukünftigen Verlauf der Wetterlage in den örtlichen Bereichen der jeweiligen dezentralen Energieerzeuger angeben.

Außerdem könnten bei geeigneter Wetterdatenerfassung - z.B. mittels Kameras - auch Wolkenmuster und Wolkenformationen erkannt werden, die sich in ihrer Form weitgehend gleichbleibend über die Erdoberfläche bewegen und diese dabei verdunkeln. Unter Zuhilfenahme von Algorithmen der Mustererkennung könnten hierbei selbst einzelne Wolkenfelder in ihrer Form erkannt und in ihrer Bewegungsrichtung und -geschwindigkeit vorhergesagt werden.

Außerdem kann gemäß einer weiteren vorteilhaften Ausführungsform des erfindungsgemäßen Verfahrens vorgesehen sein, dass der Steuereinrichtung von einer Wetterdatenbank auch Wettervorhersagedaten zugeführt werden, die eine zukünftige Wetterlage im örtlichen Bereich der jeweiligen dezentralen Energieerzeuger angeben, und die Bestimmung der Wetterprognosedaten auch unter Verwendung der Wettervorhersagedaten erfolgt.

Hierbei können die Wettervorhersagedaten dazu verwendet werden, die mittels der Steuereinrichtung bestimmten Wetterprognosedaten zu untermauern oder längerfristige Tendenzen in der Entwicklung der jeweiligen Wetterlage in die Bestimmung der Wetterprognosedaten einfließen zu lassen.

Konkret kann hinsichtlich der Beurteilung der Wetterlage in den örtlichen Bereichen der jeweiligen dezentralen Energieerzeuger vorgesehen sein, dass die Wetterprognosedaten eine Angabe über zumindest einen der folgenden Werte umfassen: Bewölkungsdichte, Sonneneinstrahlung, Windstärke, Windrichtung, aktuelle Schwankungsbreite der Windstärke (quasi eine "Böigkeit" des Windes), aktuelle Schwankungsbreite der Sonneneinstrahlung, also beispielsweise ein komplett bedeckter oder wolkenloser Himmel im Vergleich zu einem teils sonnig, teils wolkigen Himmel.

Hierdurch sind nämlich diejenigen Werte angegeben, die einen maßgeblichen Einfluss auf die Energieerzeugung der jeweiligen dezentralen Energieerzeuger besitzen.

Die oben genannte Aufgabe wird auch durch eine Steuereinrichtung einer Automatisierungsanlage eines elektrischen Energieversorgungsnetzes gelöst, die zur Durchführung eines Verfahrens gemäß einer der voranstehend beschriebenen Ausführungsformen eingerichtet ist.

Schließlich wird die oben genannte Aufgabe auch durch eine Automatisierungsanlage mit einer entsprechend eingerichteten Steuereinrichtung gelöst.

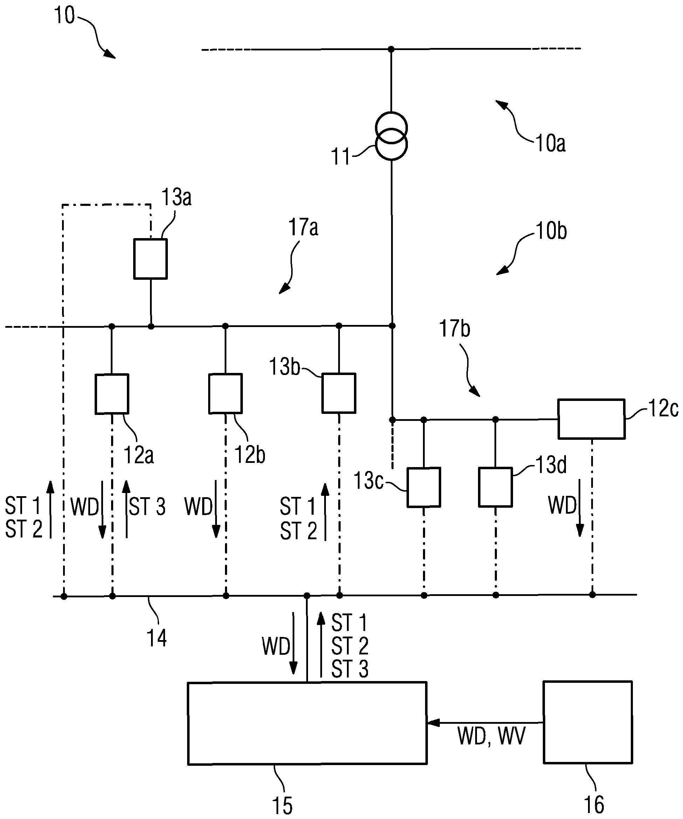

Die Erfindung soll im Folgenden anhand eines Ausführungsbeispiels näher erläutert werden. Hierzu zeigt die Figur eine schematische Ansicht eines elektrischen Energieversorgungsnetzes, das durch eine Steuereinrichtung gesteuert wird.

In der Figur ist ein Teil eines elektrischen Energieversorgungsnetzes 10 gezeigt. Das Energieversorgungsnetz weist einen Mittelspannungsteil 10a (ca. 6-30kV) und einen Niederspannungsteil 10b (< 1kV) auf. Die beiden Netzteile 10a, 10b sind über eine Transformatorstation 11 miteinander verbunden.

Im Niederspannungsteil 10b des Energieversorgungsnetzes 10 sind dezentrale Energieerzeuger 12a, 12b, 12c vorgesehen, die elektrische Energie in das Energieversorgungsnetz einspeisen können. Bei den dezentralen Energieerzeugern handelt es sich um solche Energieerzeuger, deren erzeugte Energiemenge von einer aktuellen Wetterlage im örtlichen Bereich des jeweiligen dezentralen Energieerzeugers, insbesondere von einer lokalen Sonneneinstrahlung oder eine lokalen Windstärke, abhängt. Konkret kann es sich bei den dezentralen Energieversorgern 12a, 12b um Photovoltaikanlagen handeln, die z.B. auf Dächern von Wohnhäusern installiert sein können und ihre elektrische Energie in einen ersten Abschnitt 17a des Energieversorgungsnetzes 10 einspeisen. Bei dem dezentralen Energieerzeuger 12c kann es sich außerdem um eine Windkraftanlage handeln, die ihre elektrische Energie in einen zweiten Abschnitt 17b des Energieversorgungsnetzes 10 einspeist. Kleinere Windkraftanlagen werden nämlich zur Einspeisung elektrischer Energie immer häufiger auch direkt am Niederspannungsteil von Energieversorgungsnetzen angeschlossen.

Außerdem sind im Niederspannungsteil 10b des Energieversorgungsnetzes 10 auch elektrische Endverbraucher vorgesehen, von denen in der Figur lediglich beispielhaft die Endverbraucher 13a, 13b, 13c, 13d dargestellt sind. Konkret beziehen die Endverbraucher 13a und 13b ihre elektrische Energie aus dem ersten Abschnitt 17a des Energieversorgungsnetzes 10, während die Endverbraucher 13c und 13d aus dem zweiten Abschnitt 17b gespeist werden. Als Endverbraucher können in diesem Zusammenhang sowohl einzelne elektrische Geräte, z.B. Hausgeräte (Waschmaschinen, Trockner, Kühlschränke, Gefrierschränke), Fernsehgeräte oder Computer, als auch Gruppen von elektrischen Geräten (z.B. eine Außenbereichs- oder Treppenhausbeleuchtung) angesehen werden.

Sowohl die dezentralen Energieerzeuger 12a-c, als auch die Endverbraucher 13a-d sind über eine Kommunikationsverbindung, die in der Figur lediglich beispielhaft als Kommunikationsbus 14 dargestellt ist, mit einer Steuereinrichtung 15 einer ansonsten nicht näher gezeigten Automatisierungsanlage zur Steuerung und Überwachung des Energieversorgungsnetzes 10 verbunden. Dabei kann der Kommunikationsbus 14 beispielsweise Teil einer Automatisierungsbusses sein, der zur Kommunikationsverbindung der einzelnen Komponenten der Automatisierungsanlage des Energieversorgungsnetzes 10 dient. Der Kommunikationsbus 14 kann z.B. als Ethernet-Bus ausgeführt sein, über den Datentelegramme gemäß dem für Automatisierungsanlagen von Energieversorgungsnetzen geltenden Standard IEC 61850 übertragen werden können. Die Steuereinrichtung 15 kann entweder durch eine zentrale Datenverarbeitungseinrichtung oder durch ein System von verteilt angeordneten Datenverarbeitungseinrichtungen gebildet sein. Außerdem kann die Steuereinrichtung 15 optional auch mit einer Wetterdatenbank 16 in Verbindung stehen.

Nachfolgend soll die Vorgehensweise bei der vorausschauenden Steuerung des Energieversorgungsnetzes 10 dargestellt werden:
Die Steuereinrichtung 15 führt im Betrieb eine Steuersoftware aus, die unter anderem ein dynamisches mathematisches Netzmodell berechnet, das einen Zusammenhang zwischen einer aktuellen Wetterlage im örtlichen Bereich des jeweiligen dezentralen Energieerzeugers und der von dem jeweiligen dezentralen Energieerzeuger in einzelne Abschnitte des elektrische Energieversorgungsnetzes eingespeisten elektrischen Energie angibt. Dieses Netzmodell wird dazu verwendet, eine erwartete zukünftige Einspeisemenge elektrischer Energie für jeden dezentralen Energieerzeuger 12a-c zu bestimmen. Dazu werden der Steuereinrichtung 15 Wetterdaten WD zugeführt, die die aktuelle Wetterlage im örtlichen Bereich der jeweiligen dezentralen Energieerzeuger 12a-c angeben. Solche Wetterdaten WD umfassen beispielsweise hinsichtlich der Photovoltaikanlagen 12a und 12b Angaben über Bewölkungsdichte und/oder Sonneneinstrahlung sowie hinsichtlich der Windkraftanlage 12c Angaben über Windstärke und/oder Windrichtung. Dabei können die Wetterdaten WD beispielsweise durch Messungen mittels geeigneten Messgeräten, die direkt an den jeweiligen dezentralen Energieerzeugern 12a-c vorgesehen sind, erfasst werden. Alternativ oder zusätzlich können die Wetterdaten WD auch von der Wetterdatenbank 16 (z.B. Deutscher Wetterdienst) bereitgestellt und beispielsweise über eine Internetverbindung an die Steuereinrichtung 15 übermittelt werden. In diesem Fall ist zur Auswahl der zu den jeweiligen Energieerzeugern 12a-c passenden Wetterdaten WD eine Kenntnis über die genaue geografische Position der jeweiligen dezentralen Energieerzeuger 12a-c notwendig, die beispielsweise einmalig bei Inbetriebnahme des jeweiligen Energieerzeugers 12a-c bestimmt und in die Steuereinrichtung 15 eingepflegt werden kann.

Die an den dezentralen Energieerzeugern 12a-c direkt erfassten Wetterdaten WD werden z.B. in Form von Datenpaketen über den Kommunikationsbus 14 an die Steuereinrichtung 15 übertragen. Alternativ können die Wetterdaten WD auch über beliebige andere drahtgebundene oder drahtlose Kommunikationsverfahren an die Steuereinrichtung 15 übermittelt werden.

Neben den aktuellen Wetterdaten WD hält die Steuereinrichtung 15 auch historische Wetterdaten vor, also solche Wetterdaten, die zu vergangenen Zeitpunkten an die Steuereinrichtung 15 übermittelt worden sind und dort in einem Archivspeicher abgespeichert worden sind. Die Steuereinrichtung 15 untersucht nun unter Verwendung von Mustererkennungsmethoden die aktuellen und die abgespeicherten historischen Wetterdaten und leitet aus dem Vergleich dieser Wetterdaten wahrscheinliche Entwicklungen der Wetterlage an den örtlichen Bereichen der jeweiligen dezentralen Energieerzeuger 12a-c ab und bestimmt auf diese Weise Wetterprognosedaten, die eine erwartete zukünftige Wetterlage im örtlichen Bereich der jeweiligen dezentralen Energieerzeuger 12a-c angeben. Diese Wetterprognosedaten werden für nah in der Zukunft liegende Zeiträume durchgeführt, und decken so beispielsweise einen Zeitbereich von bis zu wenigen Minuten oder bis zu einer Stunde in die Zukunft ab.

Optional können zur genaueren Ermittlung oder zur Verifizierung der mit den Mustererkennungsverfahren bestimmten Wetterprognosedaten auch Wettervorhersagedaten WV von der Wetterdatenbank 16 bezogen werden, die eine von einem Wetterdienst erwartete Entwicklung der Wetterlage im Bereich der jeweiligen dezentralen Energieerzeuger angeben.

Anhand der ermittelten Wetterprognosedaten bestimmt die Steuereinrichtung 15 unter Verwendung des Netzmodells erwartete zukünftige Einspeisemengen elektrischer Energie, die seitens der jeweiligen dezentralen Energieerzeuger 12a-c in die jeweiligen Netzabschnitte 17a und 17b eingespeist werden. Diese erwarteten Einspeisemengen erlauben dann einen Rückschluss darauf, ob für den jeweiligen Netzabschnitt 17a bzw. 17b ein stabiler Betrieb erwartet wird, bei dem sich Einspeisung und Entnahme elektrischer Energie etwa die Waage halten, oder ein unausgeglichener Betriebszustand erwartet wird, der sich in einer deutlichen Erhöhung oder Verringerung des Spannungsniveaus in dem jeweiligen Netzabschnitt 17a, 17b, also einer Abweichung der Ist-Spannung von einer vorgegebenen Soll-Spannung in einem Abschnitt 17a, 17b, die einen bestimmten Abweichungsschwellenwert überschreitet, zeigen würde. Entsprechend dem Ergebnis der mit dem Netzmodell durchgeführten Berechnung erzeugt die Steuereinrichtung - entweder direkt oder indirekt über ein mit der Steuereinrichtung verbundenes Netzsteuersystem (z.B. ein SCADA-System oder ein Substation-Automation-System) Steuersignale, die eine Stabilisierung des Spannungsniveaus in den jeweiligen Netzabschnitten 17a, 17b beitragen sollen.

Dabei werden allgemein gesprochen bei einem erwarteten Absinken der Einspeisung elektrischer Energie in einen Netzabschnitt 17a oder 17b Steuersignale erzeugt, die eine Verringerung des Bezugs elektrischer Energie aus dem fraglichen Netzabschnitt 17a bzw. 17b durch die Endverbraucher 13a-d bewirken. In entsprechender Weise werden bei einem erwarteten Anstieg der Einspeisung elektrischer Energie in einen Netzabschnitt 17a, 17b Steuersignale erzeugt, die entweder eine Erhöhung des Bezugs elektrischer Energie durch die Endverbraucher 13a-d in dem fraglichen Netzabschnitt 17a, 17b oder - falls dies nicht möglich oder ausreichend sein sollte - eine vorübergehende Abschaltung oder Drosselung der Einspeisung elektrischer Energie durch einen oder mehrere dezentrale Energieerzeuger 12a-c bewirken. Durch eine zentrale Steuerung der Abschaltung bzw. Drosselung der Einspeisung kann zudem über einen Betrachtungszeitraum (z.B. ein Jahr) eine möglichst gleichmäßige Verteilung solcher Maßnahmen auf die jeweiligen Energieerzeuger 12a-c erreicht werden, so dass möglichst kein Betreiber eines Energieerzeugers benachteiligt wird.

Die Vorgehensweise soll nochmals anhand von Beispielen erläutert werden: Wird beispielsweise von der Steuereinrichtung 15 aufgrund einer plötzlich aufziehenden dichten Bewölkung im örtlichen Bereich der Photovoltaikanlagen 12a und 12b ein deutliches Absinken der Einspeisemengen elektrischer Energie in den ersten Abschnitt 17a des Energieversorgungsnetzes 10 prognostiziert, veranlasst die Steuereinrichtung 15 die Abgabe von ersten Steuersignalen ST1, die eine vorübergehende Abschaltung ausgewählter Endverbraucher (z.B. der Endverbraucher 13a und 13b) in diesem Abschnitt 17a bewirken. Dadurch dass der verringerten Einspeisemenge nunmehr eine ebenfalls verringerte Entnahme elektrischer Energie entgegensteht, kann das Spannungsniveau in dem ersten Abschnitt 17a stabil gehalten werden. Nimmt die Einspeisemenge aufgrund verstärkter Sonneneinstrahlung dann wieder zu, so können die abgeschalteten Endverbraucher 13a, 13b mittels zweiten Steuersignalen ST2 wieder eingeschaltet werden. Steigt die Einspeisung aufgrund weiter erhöhter Sonneneinstrahlung noch weiter an oder sind einige der Endverbraucher 13a, 13b durch ihren Nutzer ausgeschaltet worden, so können zur Vermeidung eines Ungleichgewichtszustands im ersten Netzabschnitt 17a auch dritte Steuersignale ST3 erzeugt werden, die eine Abschaltung oder Drosselung ausgewählter Energieerzeuger, z.B. des Energieerzeugers 12a, bewirken.

Auf die beschriebene Weise kann ein Energieversorgungsnetz, in das dezentrale Energieerzeuger eingebunden sind, deren Einspeisemenge elektrischer Energie von einer aktuellen Wetterlage abhängig ist, vorausschauend stabil gesteuert werden, insbesondere kann die Spannungsstabilität in einzelnen Abschnitten des Energieversorgungsnetzes gesichert werden.

## Patentansprüche

1. Verfahren zum Steuern eines elektrischen Energieversorgungsnetzes (10), aus dem elektrische Endverbraucher (13a-d) mit elektrischer Energie versorgt werden und in das solche dezentrale Energieerzeuger (12a-c) elektrische Energie einspeisen, deren erzeugte Energiemenge von einer aktuellen Wetterlage im örtlichen Bereich des jeweiligen dezentralen Energieerzeugers (12a-c) abhängt, wobei bei dem Verfahren folgende Schritte durchgeführt werden:
- Bereitstellen eines mathematischen Netzmodells in einer Steuereinrichtung (15) einer Automatisierungsanlage des elektrischen Energieversorgungsnetzes (10), wobei das Netzmodell einen Zusammenhang zwischen einer aktuellen Wetterlage im örtlichen Bereich des jeweiligen dezentralen Energieerzeugers (12a-c) und der von dem jeweiligen dezentralen Energieerzeuger (12a-c) in einzelne Abschnitte (17a, 17b) des elektrische Energieversorgungsnetzes (10) eingespeisten elektrischen Energie angibt;
- Übermitteln von eine aktuelle Wetterlage im örtlichen Bereich der jeweiligen dezentralen Energieerzeuger (12a-c) angebenden Wetterdaten an die Steuereinrichtung (15);
- Ermitteln von eine erwartete zukünftige Wetterlage im Bereich der jeweiligen dezentralen Energieerzeuger (12a-c) angebenden Wetterprognosedaten aus den Wetterdaten mittels der Steuereinrichtung (15); und
- Bestimmen einer erwarteten zukünftigen Einspeisung elektrischer Energie seitens der jeweiligen dezentralen Energieerzeuger (12a-c) in das elektrische Energieversorgungsnetz (10) aus den Wetterprognosedaten mittels der Steuereinrichtung (15) unter Verwendung des Netzmodells;
**gekennzeichnet durch** den Schritt
- Erzeugen von Steuersignalen mittels der Steuereinrichtung (15), die zur Stabilisierung eines Spannungsniveaus in solchen Abschnitten (17a, 17b) des Energieversorgungsnetzes (10) dienen, in denen unter Verwendung der Ergebnisse des Netzmodells eine erwartete zukünftige Einspeisung elektrischer Energie ermittelt worden ist, die zu einer Abweichung des Spannungsniveaus in dem jeweiligen Abschnitt (17a, 17b) von einem vorgegebenen Soll-Spannungsniveau führt, die einen Abweichungsschwellenwert übersteigt.

2. Verfahren nach Anspruch 1,
**dadurch gekennzeichnet, dass**
- für den Fall, dass die ermittelte zukünftige Einspeisung elektrischer Energie in einen Abschnitt (17a, 17b) des Energieversorgungsnetzes (10) ein Absinken des Spannungsniveaus in diesem Abschnitt (17a, 17b) angibt, die Steuersignale ausgewählte elektrische Endverbraucher (13a-d), die von dem betreffenden Abschnitt (13a-d) gespeist werden, abschalten.

3. Verfahren nach Anspruch 1 oder 2,
**dadurch gekennzeichnet, dass**
- für den Fall, dass die ermittelte zukünftige Einspeisung elektrischer Energie in einen Abschnitt (17a, 17b) des Energieversorgungsnetzes (10) eine Erhöhung des Spannungsniveaus in diesem Abschnitt (17a, 17b) angibt, die Steuersignale ausgewählte elektrische Endverbraucher (13a-d), die von dem betreffenden Abschnitt (17a, 17b) gespeist werden, einschalten und/oder ausgewählte dezentrale Energieerzeuger (12a-c), die in den betreffenden Abschnitt einspeisen, abschalten oder drosseln.

4. Verfahren nach einem der vorangehenden Ansprüche,
**dadurch gekennzeichnet, dass**
- die Wetterdaten mittels Messgeräten an dem jeweiligen dezentralen Energieerzeuger (12a-c) erfasst und/oder von einer zentralen Wetterdatenbank (16) bereitgestellt und an die Steuereinrichtung (15) übermittelt werden.

5. Verfahren nach einem der vorangehenden Ansprüche,
**dadurch gekennzeichnet, dass**
- die Ermittlung von die erwartete zukünftige Wetterlage im örtlichen Bereich der jeweiligen dezentralen Energieerzeuger (12a-c) unter Verwendung von Mustererkennungsverfahren erfolgt, die einen Vergleich der aktuellen Wetterdaten mit in der Steuereinrichtung (15) gespeicherten historischen Wetterdaten durchführen und daraus eine wahrscheinliche Entwicklung der Wetterlage im örtlichen Bereich der jeweiligen dezentralen Energieerzeuger (12a-c) unter Bestimmung der Wetterprognosedaten bestimmen.

6. Verfahren nach einem der vorangehenden Ansprüche,
**dadurch gekennzeichnet, dass**
- der Steuereinrichtung (15) von einer Wetterdatenbank (16) auch Wettervorhersagedaten zugeführt werden, die eine zukünftige Wetterlage im örtlichen Bereich der jeweiligen dezentralen Energieerzeuger (12a-c) angeben, und die Bestimmung der Wetterprognosedaten auch unter Verwendung der Wettervorhersagedaten erfolgt.

7. Verfahren nach einem der vorangehenden Ansprüche,
**dadurch gekennzeichnet, dass**
- die Wetterprognosedaten eine Angabe über zumindest einen der folgenden Werte umfassen:
- Bewölkungsdichte,
- Sonneneinstrahlung,
- Schwankungsbreite der Sonneneinstrahlung,
- Windstärke,
- Windrichtung,
- Schwankungsbreite der Windstärke.

8. Steuereinrichtung (15) einer Automatisierungsanlage eines elektrischen Energieversorgungsnetzes (10), die zur Durchführung eines Verfahrens gemäß einem der Ansprüche 1 - 7 eingerichtet ist.

9. Automatisierungsanlage mit einer Steuereinrichtung (15) gemäß Anspruch 8.

## Claims

1. Method for controlling an electrical energy supply network (10), from which electrical end consumers (13a-d) are supplied with electrical energy and into which such decentralized energy producers (12a-c) feed electrical energy, the amount of energy produced by said producers depending on a current weather situation in the local area of the respective decentralized energy producer (12a-c), the following steps being carried out in the method:
- a mathematical network model is provided in a control device (15) of an automation installation of the electrical energy supply network (10), the network model indicating a relationship between a current weather situation in the local area of the respective decentralized energy producer (12a-c) and the electrical energy fed into individual sections (17a, 17b) of the electrical energy supply network (10) by the respective decentralized energy producer (12a-c);
- weather data indicating a current weather situation in the local area of the respective decentralized energy producers (12a-c) are transmitted to the control device (15);
- weather forecast data indicating an expected future weather situation in the area of the respective decentralized energy producers (12a-c) are determined from the weather data by means of the control device (15); and
- an expected future supply of electrical energy into the electrical energy supply network (10) by the respective decentralized energy producers (12a-c) is determined from the weather forecast data by means of the control device (15) using the network model;
**characterized by** the following step
- control signals are produced by means of the control device (15) and are used to stabilize a voltage level in those sections (17a, 17b) of the energy supply network (10) in which an expected future supply of electrical energy has been determined using the results of the network model, which expected future supply results in a deviation of the voltage level in the respective section (17a, 17b) from a predefined desired voltage level, which deviation exceeds a deviation threshold value.

2. Method according to Claim 1,
**characterized in that**
- if the determined future supply of electrical energy into a section (17a, 17b) of the energy supply network (10) indicates a fall in the voltage level in this section (17a, 17b), the control signals disconnect selected electrical end consumers (13a-d) which are fed by the section (17a, 17b) in question.

3. Method according to Claim 1 or 2,
**characterized in that**
- if the determined future supply of electrical energy into a section (17a, 17b) of the energy supply network (10) indicates an increase in the voltage level in this section (17a, 17b), the control signals switch on selected electrical end consumers (13a-d) which are fed by the section (17a, 17b) in question and/or disconnect or restrict selected decentralized energy producers (12a-c) which feed energy into the section in question.

4. Method according to one of the preceding claims,
**characterized in that**
- the weather data are acquired by means of measuring devices on the respective decentralized energy producer (12a-c) and/or are provided by a central weather database (16) and are transmitted to the control device (15).

5. Method according to one of the preceding claims,
**characterized in that**
- the expected future weather situation in the local area of the respective decentralized energy producers (12a-c) is determined using pattern recognition methods which compare the current weather data with historical weather data stored in the control device (15) and determine probable progress of the weather situation in the local area of the respective decentralized energy producers (12a-c) therefrom by determining the weather forecast data.

6. Method according to one of the preceding claims,
**characterized in that**
- weather prediction data indicating a future weather situation in the local area of the respective decentralized energy producers (12a-c) are also supplied to the control device (15) from a weather database (16), and the weather forecast data are also determined using the weather prediction data.

7. Method according to one of the preceding claims,
**characterized in that**
- the weather forecast data indicate at least one of the following values:
- cloud cover,
- solar radiation,
- range of variation of the solar radiation,
- wind strength,
- wind direction,
- range of variation of the wind strength.

8. Control device (15) of an automation installation of an electrical energy supply network (10), which is set up to carry out a method according to one of Claims 1-7.

9. Automation installation having a control device (15) according to Claim 8.

## Revendications

1. Procédé de commande d'un réseau (10) d'alimentation en énergie électrique, à partir duquel des consommateurs (13a-d) finaux d'électricité sont alimentés en énergie électrique et dans lequel injectent de l'énergie électrique les producteurs (12a-c) d'énergie décentrés, dont la quantité d'énergie produite dépend des conditions météorologiques en cours dans la région locale du producteur (12a-c) d'énergie décentré, procédé dans lequel on effectue les stades suivants :
- on se procure un modèle de réseau mathématique dans un dispositif (15) de commande d'une installation d'automatisation du réseau (10) d'alimentation en énergie électrique, le modèle de réseau indiquant une relation entre des conditions météorologiques en cours dans la zone locale du producteur (12a-c) d'énergie décentré et l'énergie électrique injectée dans divers tronçons (17a, 17b) du réseau (10) d'alimentation en énergie électrique par le producteur (12a-c) d'énergie décentré ;
- on transmet au dispositif (15) de commande des données météorologiques indiquant les conditions météorologiques en cours dans la région de l'espace du producteur (12a-c) d'énergie décentré ;
- on détermine, à partir des données météorologiques, à l'aide du dispositif (15) de commande, des données de pronostic de conditions météorologiques indiquant les conditions météorologiques escomptées à venir dans la région du producteur (12a-c) d'énergie décentré et
- on détermine une injection escomptée à venir d'énergie électrique de la part du producteur (12a-c) d'énergie décentré dans le réseau (10) d'alimentation en énergie électrique à partir des données de pronostic météorologique à l'aide du dispositif (15) de commande en utilisant le modèle du réseau ;
**caractérisé par** le stade
- on produit des signaux de commande au moyen du dispositif (15) de commande, qui servent à la stabilisation d'un niveau de tension dans les tronçons (17a, 17b) du réseau (10) d'alimentation en énergie, dans lesquels, en utilisant les résultats du modèle du réseau, il a été déterminé une injection à venir escomptée d'énergie électrique, qui donne un écart du niveau de tension dans le tronçon (17a, 17b) à un niveau de tension de consigne donné à l'avance, qui dépasse une valeur de seuil d'écart.

2. Procédé suivant la revendication 1,
**caractérisé en ce que**
- dans le cas où l'injection à venir déterminée d'énergie électrique dans un tronçon (17a, 17b) du réseau (10) d'alimentation en énergie indique un abaissement du niveau de tension dans ce tronçon (17a, 17b), les signaux de commande débranchent des consommateurs (13a-d) finaux d'électricité sélectionnés, qui sont alimentés par le tronçon (13a-d) concerné.

3. Procédé suivant la revendication 1 ou 2,
**caractérisé en ce que**
- dans le cas où l'injection à venir déterminée d'énergie électrique dans un tronçon (17a, 17b) du réseau (10) d'alimentation en énergie indique une élévation du niveau de tension dans ce tronçon (17a, 17b), les signaux de commande branchent des consommateurs (13a-d) finaux d'énergie électrique sélectionnés, qui sont alimentés par le tronçon (17a, 17b) concerné, et/ou des producteurs (12a-c) d'énergie décentrés sélectionnés, qui injectent dans le tronçon concerné des branches ou limites.

4. Procédé suivant l'une des revendications précédentes, **caractérisé en ce que**
- on détecte les données météorologiques au moyen d'appareils de mesure sur le producteur (12a-c) d'énergie décentré et/ou on les met à disposition par une base (16) de données météorologiques centrale et on les transmet au dispositif (15) de commande.

5. Procédé suivant l'une des revendications précédentes,
**caractérisé en ce que**
- la détermination des conditions météorologiques à venir escomptées dans la région locale du producteur (12a-c) d'énergie décentré s'effectue en utilisant des procédés de reconnaissance de modèle, qui effectuent une comparaison des données météorologiques en cours à des données météorologiques historiques mémorisées dans le dispositif (15) de commande et en en déterminant, en déterminant des données de pronostic météorologiques, une évolution vraisemblable des conditions météorologiques dans la zone locale du producteur (12a-c) d'énergie décentré.

6. Procédé suivant l'une des revendications précédentes,
**caractérisé en ce que**
- on envoie au dispositif (15) de commande, par une base (16) de données météorologiques, également des données de prévisions météorologiques, qui indiquent des prédictions météorologiques à venir dans la région locale du producteur (12a-c) d'énergie décentré et on effectue la détermination des données de pronostic météorologiques en utilisant aussi les données de prévisions météorologiques.

7. Procédé suivant l'une des revendications précédentes,
**caractérisé en ce que**
- les données de pronostic météorologiques comprennent une indication sur au moins l'une des valeurs suivantes :
- densité nuageuse,
- ensoleillement,
- amplitude de variations de l'ensoleillement,
- force du vent,
- direction du vent,
- amplitude de variation de la force du vent.

8. Dispositif (15) de commande d'une installation d'automatisation d'un réseau (10) d'alimentation en énergie électrique, qui est conçu pour effectuer un procédé suivant l'une des revendications 1 à 7.

9. Installation d'automatisation ayant un dispositif (15) de commande suivant la revendication 8.
